# EUROPÄISCHE PATENTSCHRIFT

(11) **EP 1 690 726 B1**
(45) Veröffentlichungstag und Bekanntmachung des Hinweises auf die Patenterteilung: **24.09.2008**
(21) Anmeldenummer: 05110674.8
(22) Anmeldetag: 12.11.2005
(51) Int. Cl.: B60K 15/04

(54) **Deckellos verschließbarer Stutzenabschluss für einen Einfüllstutzen eines Tanks eines Kraftfahrzeugs**
Capless filler nozzle end-piece for a vehicle fuel tank
Embout de remplissage d'un réservoir de carburant sans bouchon

(30) Priorität: 10.02.2005 DE 202005002223 U
(43) Veröffentlichungstag der Anmeldung: 16.08.2006
(73) Patentinhaber: Gerdes GmbH, 50170 Kerpen (DE)
(72) Erfinder: Gerdes, Ralf, 50935 Köln (DE)
(74) Vertreter: Bungartz, Klaus Peter

(56) Entgegenhaltungen:
- EP-A- 1 262 355
- EP-A- 1 319 545
- US-A- 2 206 948
- US-A- 3 845 877

## Beschreibung

Die Erfindung betrifft einen deckellos verschließbaren Stutzenabschluss für einen Einfüllstutzen eines Tanks eines Kraftfahrzeugs mit einem Verriegelungsmittel dass derart ausgebildet ist, dass es in Abhängigkeit der Form des Ausgaberohrs der Zapfpistole nur bei Befüllung mit geeignetem Kraftstoff entriegelbar ist, um das Einschieben des Ausgaberohrs durch die obere Einfüllöffnung und die untere Dichtklappe zu ermöglichen.

Solche, ohne Deckel verschließbaren Stutzenabschlüsse sind aus der DE 203 09 799.8 U1 bekannt. Bei diesem Stutzenabschluss wird der Stutzen über zwei Klappen verschlossen, die übereinander im Stutzen angeordnet sind und durch die Kraft jeweils einer Verschlussfeder in Anlage an eine Dichtfläche gehalten sind. Durch Einstecken des Ausgaberohrs einer Zapfpistole oder einer Tülle eines Reservekanisters werden die beiden Klappen nach unten gedrückt, so dass sich eine durchgängige Öffnung ergibt.

Obwohl dieser Verschluss eine gute Dichtung auch ohne zusätzlichen Tankdeckel bietet, wäre es doch wünschenswert, wenn sie weiter verbessert werden könnten und zusätzlich eine Sicherung gegen Fehlbetankung aufweisen würden. Insbesondere im Falle moderner Motoren ist es zunehmen wichtig, auf die sichere Kraftstoffsorte zu achten, da beispielsweise moderne Einspritzsystem einer Common-Rail-Dieseleinspritzung über den Schmierstoffgehalt des Dieseltreibstoffs geschmiert werden und bereits nach kurzer Betriebszeit mit einem Ottokraftstoff schweren Schaden nehmen können.

Die EP 1 319 545 A1 beschreibt einen deckellos verschließbaren Stutzenabschluss zum Verhindern von Befüllen des Stutzens mit ungeeignetem Kraftstoff, gemäb dem einleitenden Teil des Anspruchs 1. Hierzu sind in dem Stutzen über den Umfang verteilte Haken angeordnet, die einen gebogenen mittleren Bereich aufweisen, der von dem vorderen Rand der Zapfpistole dann weggedrückt wird, wenn die Zapfpistole einen hinreichenden Durchmesser aufweist. Dies führt dazu, dass bei Einschieben einer zu kleinen Zapfpistole die Haken zumindest nicht alle nach außen verdrängt werden können, wobei dann aber der untere Teil der Zapfpistole mit den nicht nach außen gedrückten Endbereichen der Haken in Eingriff kommt, so dass die Zapfpistole nicht weiter in den Stutzen eingeführt werden kann, sondern sich verhakt.

Obwohl dieser Stutzen eine Möglichkeit bietet, Fehlbetankungen zu vermeiden, weist er doch den Nachteil auf, dass zwar die Zapfpistole nicht ganz in den Stutzen eingeführt werden kann, aber bei entsprechender Missachtung der Sicherheitsvorschrift dennoch ein Befüllen des Stutzens mit zumindest einer kleinen Menge möglich wäre, weil durch die Sicherheitselemente kein Deckel blockiert wird, sondern lediglich das Einschieben der Zapfpistole in den Stutzen verhindert wird. Dies verhindert aber nicht, dass bei eingehaktem, zu kleinem Rohr der Zapfpistole nicht die Füllfunktion betätigt werden kann, so dass dann Kraftstoff einer ungeeigneten Sorte in den Stutzen einläuft.

Ein weiterer Nachteil dieser Ausgestaltung besteht darin, dass das Verdrängen der Haken mechanisch sehr aufwendig ist, was zu einer unzuverlässigen Funktion führt. So kann beispielsweise durch verkantetes und mit einer gewissen Kraft erfolgtes Einsetzen der Zapfpistole ein Teil der Haken weggedrückt werden, so dass nur einige der Haken in Eingriff kommen, die in Folge der Funktion dann verbiegen können. Im Laufe der Zeit kann so der Stutzenabschluss beschädigt werden, insbesondere dann, wenn der Benutzer des Fahrzeugs mit Gewalt probiert, das Rohr der Zapfpistole einzuführen.

Die EP 1 262 355 A1 offenbart wiederum einen deckellosen Stutzenabschluss, der im unteren Bereich eine Sicherung gegen Befüllen mit falschem Kraftstoff aufweist. Hierzu ist oberhalb einer unteren Abdeckklappe ein quer zur Stutzenlängsachse verschiebbares Sicherungselement vorgesehen, dass durch den eindringenden Rohrabschnitt der Zapfpistole seitlich verdrängt wird. Durch diese Verdrängungsbewegung gerät ein Rand der unteren Abdeckplatte außer Eingriff, so dass eine Verriegelung, die sich durch diesen Eingriff zwischen dem Verschiebeelement und der unteren Abdeckklappe ergibt, aufgehoben wird und die Zapfpistole unter Aufschwenken der unteren Abdeckklappe weiter eingeschoben werden kann.

Diese Ausgestaltung weist zunächst den Nachteil auf, dass die Zapfpistole unmittelbar auf der unteren Abdeckklappe aufsetzt, also auf die eigentliche Verschlussklappe des Stutzens wirkt. Wird nun versucht, mit einer "falschen" Zapfpistole zu tanken, kann dies durch den Druck auf die nicht entriegelte untere Abdeckklappe eine Beschädigung dieser Dichtklappe verursachen.

Weiter nachteilig bei dieser Ausgestaltung ist, dass durch ein verkantetes, schräges Ansetzen der Zapfpistole ebenfalls eine Entriegelung erfolgen kann, obwohl der Durchmesser des Rohres der Zapfpistole eigentlich zu klein ist. Ferner ist der Eingriff der unteren Abdeckplatte in der Nut des Verschiebeelementes vergleichsweise störanfällig, da etwa durch Verschmutzungen oder durch Verschleiß in Folge des regelmäßig auftretenden seitlichen Abgleiten des Rohres in dem Verschiebeelement diese Nut beschädigt oder außer Eingriff geraten kann. In diesem Fall ist aber die Funktion der Sicherheit aufgehoben, so dass auch mit kleineren Rohrdurchmessern die untere Abdeckung nach unten geklappt werden kann.

Ein weiterer Nachteil dieser Ausgestaltung besteht darin, dass die Sicherung erlaubt, dass auch der Rüssel einer ungeeigneten Zapfpistole vergleichsweise tief eingeschoben werden kann, bevor der Fahrer feststellen kann, dass die Zapfpistole eigentlich nicht in den Stutzen passt. Viele Benutzer werden dies aber nicht realisieren sondern stattdessen entweder denken, bei der Ausgestaltung wäre es normal, dass der Rohrabschnitt der Zapfpistole nicht ganz versenkt werden kann oder von einem defekten Stutzen ausgehen. Dies kann dazu führen, dass diese Benutzer entweder mit Gewalt weiter drücken oder mit der Betankung beginnen, was dann wiederum dazu führt, dass das Benzin in den Bereich zwischen den oberen Rand des Stutzenabschlusses und der unteren Abdeckung einläuft und dort entweder durch die gesetzlich vorgeschriebene Rückführung in den Tank doch in den Kraftstoffvorrat gelangt oder in den Ausgleichsbehälter läuft. Beides ist aber in der Praxis aus verständlichen Gründen nicht erwünscht.

Aufgabe der Erfindung ist es daher, einen Stutzenabschluss zu schaffen, der möglichst einfach herstellbar ist und bei möglichst sicherem Verschluss des Stutzens die Sicherheit vor einer Fehlbetankung oder Beschädigung des Stutzens vergrößert.

Diese Aufgabe wird nach der Erfindung durch einen Stutzenabschluss gelöst, gemäß Anspruch 1.

Durch die Erfindung kann nun zwar noch nicht jede Fehlbetankung ausgeschlossen werden, dass Risiko wird jedoch deutlich minimiert. Weltweit ist es üblich, dass bleifreie Ottokraftstoffe mit Zapfpistolen gezapft werden, die einen geringeren Durchmesser des Ausgaberohrs aufweisen als Dieselkraftstoffe. Somit kann erfindungsgemäß diese Tatsache genutzt werden, eine selbsttätige Entriegelung des Stutzenabschlusses bei Verwendung der falschen Zapfpistole derart zu vermeiden, dass die obere Abdeckung entriegelt wird.

Sofern der Mineralölhandel weitere Zapfpistolenmodelle künftig verwenden sollte, wird natürlich eine weitere Erhöhung der Fehlersicherheit möglich werden. Im Idealfall kann bei Verwendung eines sortenspezifischen Durchmessers des Ausgaberohr jede Fehlbetankung bereits im Ansatz vermieden werden, was nicht nur zur Vermeidung von unnötigen Reparaturkosten sondern auch zur Entlastung der Umwelt beiträgt, dass Fehlmengen dann nicht mehr entsorgt werden müssen. Auch Mietwagenfirmen können dann darauf vertrauen, dass die Fahrzeuge nicht mehr vorsätzlich oder fahrlässig mit ungeeignetem Benzin betankt werden, um beispielsweise Kosten bei der Rückgabe zu sparen oder weil der Fahrer der jeweiligen Landessprachen nicht mächtig ist und aus Unwissenheit zur falschen Zapfpistole greift.

Der erfindungsgemäße Stutzenabschluss ist geprägt durch die Möglichkeit, die obere Einfüllöffnung zu verriegeln und diese Verriegelung nur dann aufheben zu können, wenn die "richtige" Zapfpistole angesetzt wird. Dies kann auf vielfältige Weise geschehen. Eine Möglichkeit besteht zum Beispiel darin, dass die Zapfpistole zwei gegenüberliegende Klemmbacken zur Seite drückt, die wiederum eine Schwenkplatte, die die obere Einfüllöffnung verdeckt oder von unten verschließt, verriegeln. Ist die Zapfpistole nun nicht dick genug, wird sie nicht in der Lage sein, bei Klemmbacken zu berühren oder auseinanderzudrücken, die Verriegelung kann hiermit dann nicht gelöst werden.

Gemäß der Erfindung weist der Stutzenabschluss eine schiefe Ebene vor, auf der das Ausgaberohr abgleiten kann. Diese schiefe Ebene stellt eine relativ zur Längsachse des Rohrstücks des Einfüllstutzens um einem Winkel α geneigte Abgleitfläche für die Zapfpistole dar, die die oberen Einfüllöffnung vor Freigabe der Verriegelung schützt. Der Winkel α kann zwischen 20° und 80°, bevorzugt zwischen 35° und 55° und weiter bevorzugt 45° betragen.

Der Benutzer setzt die Zapfpistole zunächst etwas neben der eigentlichen Einfüllöffnung an den oberen Anfang der Abgleitfläche an und lässt dann das Ausgaberohr längs der Abgleitfläche gleiten. Durch diese Bewegung kann dann ein Mechanismus angetrieben werden, der die Entriegelung des Verschlussmechanismus bewirkt. Dies kann, wie oben bereits beschrieben, durch das Auseinanderdrücken der Klemmbacken erfolgen. Diese seitliche Last auf die äußere Mantelfläche des Ausgaberohrs kann jedoch die Zapfpistole einem Verschleiß unterliegen, da diese üblicherweise aus Aluminium gefertigt ist und somit wenig verschleißfest ist.

Eine andere Ausgestaltung drückt daher die Verriegelungsmittel gegen eine Rückstellfeder nach unten. Dies ist wesentlich Material schonender und erlaubt ferner darüber hinaus die Verwendung längerer und besser geführter Federn. Bei Ansetzen des Ausgaberohres an die schiefe Ebene werden dann zum Beispiel zwei gegenüberliegend angeordnete Verriegelungsmittel heruntergedrückt, wobei dies dann bevorzugt dazu führt, dass dann erst ein Abgleiten des Ausgaberohres auf der Abgleitfläche möglich wird.

Hierzu ist ein durch die Verriegelung festgelegtes und über den beschriebenen Mechanismus entriegelbares Schiebeelement vorgesehen, dass neben und oberhalb der Abgleitfläche seitlich verschiebbar gelagert ist. Dieses Schiebeelement wird nach Niederdrücken der Verriegelungsmittel durch das Ausgaberohr seitlich verdrängt, wobei hierdurch auch das Ausgaberohr der Zapfpistole zusammen mit der weiteren Abwärtsbewegung weiter zur Seite geschoben wird bis das Schiebeelement die obere Einfüllöffnung vollständig freigibt. Nachfolgend kann das Ausgaberohr dann in den Rohrstutzen eingeführt werden und dort die untere Dichtklappe niederdrücken.

Weitere Merkmale des erfindungsgemäßen Stutzenabschlusses sind Über- und Unterdruckventile, die die untere Dichtklappe und, sofern die obere Abdeckung ebenfalls dichtend ausgebildet ist, auch diese obere Abdeckung bei Auftreten von kritischen Drücken, etwa durch Wärmedehnungen oder die motorseitige Entnahme von Kraftstoff aus dem Tank, einen entsprechenden Druckausgleich bewirken.

Neben der oberen Einfüllöffnung und bzw. oder der unteren Dichtklappe können zwei Arten von Bypässen angeordnet sein, wobei ein erster Bypass bei Verschieben eine Ventilkörpers infolge eines Überdrucks in eine erste Richtung öffnet, während ein zweiter Bypass bei Verschieben eines Ventilkörpers in eine zweite Richtung infolge eines Unterdrucks öffnet.

Über der unteren Dichtklappe kann ferner ein Wasserkanal angeordnet sein, der eindringendes Wasser oder Kondenswasser ableitet, damit es bei der nächsten Öffnung der unteren Dichtklappe nicht in den Tank gelangt.

Der Stutzenabschluss kann einstückig mit dem Einfüllstutzen eines Tanks eines Kraftfahrzeugs ausgebildet sein, also Teil dieses Stutzens sein. Alternativ kann er auf diesen aufgeschraubt sein und optional auch mit einer Abschraubsicherung versehen sein, wobei die Abschraubsicherung von Federelementen gebildet sein kann, die bei Aufsetzen des Stutzenabschluss auf den Tankstutzen eine Fläche federnd hintergreifen und die Abnahme blockieren, wobei die Federelemente über ein Greifwerkzeug greifbar und zum Deaktivieren der Abnahmesicherung rückziehbar sind.

Weitere Merkmale und Vorteile der Erfindung ergeben sich aus den Unteransprüchen und aus der nachfolgenden Beschreibung eines bevorzugten Ausführungsbeispiels der Erfindung anhand der Zeichnung.

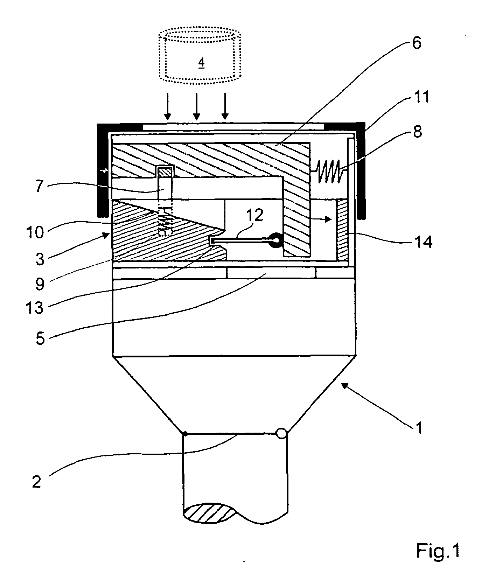

In Figur 1 der Zeichnung ist eine Seitenansicht eines erfindungsgemäßen Ausführungsbeispiels dargestellt, das nachfolgend beschrieben wird, ohne dass die Erfindung oder der Schutzbereich der vorliegenden Anmeldung auf diese konkrete Ausgestaltung beschränkt sein soll.

Der in Figur 1 dargestellte Stutzenabschluss wird von einem Rohrstück gebildet, dessen Querschnitt sich in Richtung der Öffnung zunächst konisch erweitert. Unterhalb des erweiternden Abschnittes ist die untere Dichtklappe 2 vorgesehen, die den Stutzen abdichtet. Hierzu ist die Dichtklappe über eine Feder gegen eine Dichtfläche (hier nicht dargestellt) angestellt. Weiter weist der Stutzenabschluss hier ebenfalls nicht dargestellte Über- und Unterdruckventile sowie einen Wasserablauf auf, über den eindringendes Wasser abgeleitet werden kann.

Im oberen Bereich ist zunächst die obere Einfüllöffnung 5 vorgesehen, durch die das Ausgaberohr 4 der Zapfpistole in den Stutzen eingeführt werden kann, dass dann bei weiterem Eindringen die untere Dichtklappe 2 öffnet. Über der oberen Einfüllöffnung 5 ist ein Verschlussmechanismus 3 angeordnet, der ohne Öffnung desselben ein Einführen der Zapfpistole verhindert.

Um Fehlbetankungen nun zu minimieren oder möglichst zu vermeiden soll nun dieser Verschlussmechanismus 3 nur dann geöffnet werden können, wenn die "richtige" Zapfpistole, also die Zapfpistole zum Einfüllen geeigneten Treibstoffs angesetzt wird.

Hierzu ist in den oberen Stutzenabschnitt des Rohrstücks 1 ein Ringelement 14 eingesetzt, in dem wiederum ein Schiebeelement rechtwinklig zur Stutzenachse verschiebbar geführt ist. Das Schiebeelement weist eine U-förmige Form auf, wobei es ebenso auch als rundum geschlossenes Element ausgebildet sein könnte. Wesentlich ist lediglich hier, dass es einen Durchlass aufweist, durch den das Ausgaberohr 4 hindurch gesteckt werden kann.

Durch das durchgesteckte Ausgaberohr 4 werden nun Verriegelungsmittel 7 niedergedrückt, die mit oberen Bereichen formschlüssig in Ausnehmungen in dem Schiebeelement eingreifen. Durch das Niederdrücken geraten nun die Verriegelungsmittel 7 außer Eingriff, das Schiebeelement wird so freigegeben und kann dann in seitliche Richtung verschoben werden.

Unterhalb des Schiebeelementes ist eine schiefe Ebene als Abgleitfläche 10 ausgebildet, die in die innere Mantelfläche des Ringelementes 14 eingearbeitet ist. Diese Abgleitfläche 10 ist um einen Winkel α relativ zur Stutzenachse des Rohrstücks 1 geneigt und bewirkt einen seitlichen Versatz des durch das Schiebeelement eingesteckten Ausgaberohrs 10, wenn dieses weiter in den Rohrstutzen 1 eingeführt wird.

Durch den seitlichen Versatz wird das Ausgaberohr 4 nun gegen das Schiebeelement gedrückt was wiederum ein seitliches Wegschieben des Schiebeelements bewirkt, bis der Bereich oberhalb der oberen Einfüllöffnung vollständig für das Einschieben der Zapfpistole freigegeben ist. Diese Entriegelung und das nachfolgende Verschieben des Schiebeelementes sind jedoch nur dann möglich, wenn die beiden gegenüberliegenden Verriegelungsmittel 7 durch den unteren Rand der Zapfpistole niedergedrückt werden. Ist diese nicht groß genug, weil der Durchmesser des Ausgaberohres 10 zu klein ist, kann entweder kein oder nur ein Verriegelungsmittel 7 niedergedrückt werden, was die Verriegelung aber nicht aufhebt.

Das Schiebeelement ist so ausgebildet, dass es nach dem Verschieben auch dann noch die Verriegelungsmittel 7 unten hält, wenn der untere Rand der Zapfpistole seitlich nach recht bewegt und nicht mehr oberhalb der Verriegelungsmittel 7 angeordnet ist. In diesem Stadium drückt der linke Bereich des Schiebeelementes die Verriegelungsmittel 7 herunter.

Alternativ zu den beiden Verriegelungsmitteln 7 können natürlich auch weitere Verriegelungsmittel 7 verwendet werden. Wichtig ist nur, dass die nicht geeignete Treibstoffsorte über eine Zapfpistole verabreicht wird, die nicht alle Verriegelungsmittel 7 betätigen kann. Das Herunterdrücken der Verriegelungsmittel 7 hat den besonderen Vorteil, dass ein Verschleiß der Zapfpistole weitgehend ausgeschlossen ist. Insbesondere können keine seitlichen Riefen eingetrieben werden.

Bei der dargestellten bevorzugten Ausgestaltung sind die Verriegelungsmittel 7 jeweils von einem formschlüssig in eine Ausnehmung in der obere Abdeckung 6 eingreifenden Arretierstift gebildet, der gegen die Kraft einer Sicherungsfeder 9 durch das freie Ende des Ausgaberohrs 4 nach unten verlagerbar ist. Hierdurch "rastet" der Arretierstift aus der Ausnehmung in dem als obere Abdeckung eingesetzten Schiebeelement aus.

Das Schiebeelement weist im Sinne dieser Sicherung einen Sperrbereich auf, was nichts anderes heißt, als dass es in Verschlussstellung mit einem Teil seines Körpers oberhalb der oberen Einfüllöffnung angeordnet ist. Erst durch das seitliche Verschieben wird diese dann freigeben. Die schiefe Abgleitfläche 10 weist insbesondere eine Schiefstellung relativ zur Achse des Rohrabschnitts 1 von 20° bis 80°, bevorzugt von 35° bis 55° und, wie hier dargestellt weiter bevorzugt von 45° auf.

Bevorzugt ist, wie hier gezeigt, der Verschlussmechanismus über Abdeckkappe 11 geschützt, die ein Langloch zum Einstecken des Ausgaberohrs 4 aufweist, wobei die Breite des Langlochs etwas größer als der Durchmesser des Ausgaberohrs 4 ist und die Länge des Langlochs im Wesentlichen dem Verschiebeweg des Schiebeelementes entspricht.

Oberhalb der oberen Einfüllöffnung 5 ist hier eine zusätzliche Verschlussklappe 12 vorgesehen, die einen Diebstahlschutz und eine weitere Dichtung bewirkt. Hierzu ist sie gelenkig an dem Schiebeelement angeordnet wird mit diesem verschoben. An der gegenüberliegenden Seite greift sie in eine Eingriffsnut 13 ein, die die zusätzliche Verschlussklappe 12 im geschlossenen Zustand festlegt. Eine Rückstellfeder stellt nach Abziehen der Zapfpistole die Klappe 12 wieder zurück, damit diese dann bei Zurückgleiten des Schiebeelementes wieder in die Eingriffsnut 13 eingreifen kann.

Die Verriegelungsmittel können zusätzlich über die Zentralverriegelung des Kraftfahrzeuges derart blockierbar ist, dass eine Entriegelung nur bei in Φffnungsstellung befindlicher Zentralverriegelung möglich ist. Hierzu kann zum Beispiel, wie auch schon bei der Sicherung bekannter Tankklappen, ein elektromotorisch getriebener Dorn eine Bewegung des Schiebeelementes unterbinden.

Schließlich kann der Stutzenabschluss als eigenständiges Bauteil zur Verbindung mit einem bekannten Rohrstutzen ausgebildet sein oder natürlich auch unmittelbar in den Stutzen eines Tanks eingeformt sein. Wenn er ein eigenständiges Bauteil ist, kann dieses mit dem meist aus Kunststoff gefertigten Rohrabschnitt verschweißt werden oder auch über die handelübliche Verbindung, die bisher für das Aufsetzen und Befestigen eines Tankdeckel genutzt wurde, mit dem Stutzen verbunden werden. Dies hat den besonderen Vorteil, dass keine Veränderung an dem Stutzen notwendig ist, wenn ein Fahrzeug auf die deckellose Betankung umgerüstet wird.

Bevorzugt weist er dann eine Abnahmesicherung auf, die nur mittels eines Werkzeuges lösbar ist, damit der Fahrer selbst den Tankverschluss nicht mehr manipulieren kann.

### Bezugszeichenliste:

- 1: Rohrstück
- 2: Untere Dichtklappe
- 3: Verschlussmechanismus
- 4: Ausgaberohr
- 5: Obere Einfüllöffnung
- 6: Obere Abdeckung
- 7: Verriegelungsmittel
- 8: Verschlussfeder
- 9: Sicherungsfeder
- 10: Abgleitfläche
- 11: Abdeckkappe
- 12: Zusätzliche Verschlussklappe
- 13: Verriegelungsnut
- 14: Haltering

- α: Neigungswinkel der Abgleitfläche relativ zur Längsachse des Rohrstücks

## Patentansprüche

1. Deckellos verschließbarer Stutzenabschluss für einen Einfüllstutzen eines Tanks eines Kraftfahrzeugs mit einem Rohrstück (1) einem oberhalb der unteren Dichtklappe (2) angeordneten, deckellosen Verschlussmechanismus (3), der eine obere Einfüllöffnung (5) und zumindest eine, die obere Einfüllöffnung (5) im geschlossenen Zustand wenigstens partiell überdeckende oberen Abdeckung (6) aufweist, wobei eine Sicherung gegen Befüllen mit ungeeignetem Kraftstoff mit wenigstens einem Verriegelungsmittel (7) vorgesehen ist, dass derart ausgebildet ist, dass es in Abhängigkeit der Form des Ausgaberohrs (4) der Zapfpistole nur bei Befüllung mit geeignetem Kraftstoff entriegelbar ist,um das Einschieben des Ausgaberohrs (4) durch die obere Einfüllöffnung (5) und die untere Dichtklappe (2) zu ermöglichen, wobei oberhalb der oberen Einfüllöffnung (5) eine zur Längsachse des Rohrstücks (1) in einem Winkel (α) angestellte Abgleitfläche (10) angeordnet ist, längs derer das Ausgaberohr (4) bei Einsetzen in das Rohrstück (1) von einer seitlich zur oberen Einfüllöffnung (5) versetzten Anfangsposition bis zu einer zur oberen Einfüllöffnung (5) deckungsgleichen Einsteckposition abgleitendgeführt ist, und wobei die obere Abdeckung (6) von einem seitlich verschiebbaren, die obere Einfüllöffnung im geschlossenen Zustand mit einem Sperrbereich zumindest teilweise überdeckenden Schiebeelement gebildet ist, das über das Verriegelungsmittel (7) ver- und entriegelbar ist, **dadurch gekennzeichnet, dass** in dem Rohrstück (1) eine untere Dichtklappe (2), angeordnet ist und dass das Schiebeelement, nach der Entriegelung von dem Ende des Ausgaberohrs (4) zumindest in seitlicher Richtung durch das Abgleiten des Ausgaberohrs (4) auf der Abgleitfläche (10) durch den Druck des Ausgaberohrs (4) auf den Sperrbereich verdrängbar ist.

2. Deckellos verschließbarer Stutzenabschluss für einen Einfüllstutzen eines Tanks eines Kraftfahrzeugs nach Anspruch 1, **dadurch gekennzeichnet, dass** zwei oder mehr Verriegelungsmittel (7) vorgesehen sind, die in einem Abstand (a) zu einander angeordnet sind, wobei der Abstand (a) derart groß ist, dass von dem Ausgaberohr (4) einer Zapfpistole mit einem ersten Durchmesser, insbesondere einer Zapfpistole für Dieselkraftstoff, beide Verriegelungsmittel (7) entriegelbar sind, während von einer Zapfpistole mit einem relativ zum ersten Durchmesser kleineren, zweiten Durchmesser, insbesondere einer Zapfpistole für bleifreien Ottokraftstoff, keines oder nur ein Verriegelungselement (7) entriegelbar ist.

3. Deckellos verschließbarer Stutzenabschluss für einen Einfüllstutzen eines Tanks eines Kraftfahrzeugs nach dem vorhergehenden Anspruch, **dadurch gekennzeichnet, dass** zwei gegenüberliegende Verriegelungsmittel (7) vorgesehen sind, die zum Entriegeln der oberen Abdeckung (6) von dem freien Ende eines Ausgaberohrs (4) mit geeignetem Durchmesser verdrängbar sind.

4. Deckellos verschließbarer Stutzenabschluss für einen Einfüllstutzen eines Tanks eines Kraftfahrzeugs nach einem der vorhergehenden Ansprüche, **dadurch gekennzeichnet, dass** das Verriegelungsmittel (7) von einem formschlüssig in eine Ausnehmung in der oberen Abdeckung (6) eingreifenden Arretierstift gebildet ist, der gegen die Kraft einer Sicherungsfeder (9) durch das freie Ende des Ausgaberohrs (4) seitlich oder nach unten verlagerbar ist, wobei bei erfolgter Verlagerung der Eingriff des Arretierstifts mit der Ausnehmung der oberen Abdeckung (6) aufgehoben ist.

5. Deckellos verschließbarer Stutzenabschluss für einen Einfüllstutzen eines Tanks eines Kraftfahrzeugs nach Anspruch 1, **dadurch gekennzeichnet, dass** die Abgleitfläche (10) eine schiefe Ebene ist, wobei der Winkel (α) relativ zur Achse des Rohrabschnitts (1) zwischen 20° und 80°, bevorzugt zwischen 35° und 55° und weiter bevorzugt 45° beträgt.

6. Deckellos verschließbarer Stutzenabschluss für einen Einfüllstutzen eines Tanks eines Kraftfahrzeugs nach Anspruch 1, **dadurch gekennzeichnet, dass** das das Schiebeelement einen U-förmigen Innenbereich mit zwei im Wesentlichen geraden Schenkeln und einem gekrümmten Mittelbereich aufweist, wobei der Sperrbereich von einem Teil des Mittelbereichs gebildet ist und (4) wobei die Abgleitfläche (10) neben dem Mittelbereich angeordnet ist und von den geraden Schenkeln wenigstens teilweise überdeckt ist.

7. Deckellos verschließbarer Stutzenabschluss für einen Einfüllstutzen eines Tanks eines Kraftfahrzeugs nach Anspruch 6, **dadurch gekennzeichnet, dass** das die Ausnehmung zum Eingriff der Verriegelungselemente (7) in den geraden Schenkeln des Schiebeelementes angeordnet sind, wobei die Verriegelungselemente (7) von den Ausnehmungen aus derart weit nach innen ragen, dass beide Verriegelungselemente (7) nur von einem Ausgaberohr (4) mit hinreichend großem Durchmesser niederdrückbar sind und ein Ausgaberohr (4) mit zu kleinem Durchmesser nur eines der Verriegelungselemente (7) niederzudrücken vermag.

8. Deckellos verschließbarer Stutzenabschluss für einen Einfüllstutzen eines Tanks eines Kraftfahrzeugs nach Anspruch 6 oder 7, **dadurch gekennzeichnet, dass** der dem mittleren Bereich des Schiebeelementes abgewandte Teil der geraden Schenkel derart ausgebildet ist, dass nach einem Abgleiten des Ausgaberohrs (4) in Richtung der oberen Einfüllöffnung (5) in einem Maß, dass das Ausgaberohr (4) die Verriegelungsmittel (7) nicht weiter überdeckt, die Verriegelungsmittel (7) über den weiteren Verschiebeweg von den geraden Schenkeln niedergehalten ist, bis das Ausgaberohr (4) in die obere Einfüllöffnung (5) einsteckbar ist.

9. Deckellos verschließbarer Stutzenabschluss für einen Einfüllstutzen eines Tanks eines Kraftfahrzeugs nach einem der Ansprüche 6 bis 8, **dadurch gekennzeichnet, dass** das die Innenkrümmung des mittleren Bereichs des Schiebeelements im Wesentlichen der Außenkrümmung des Ausgaberohrs (4) entspricht.

10. Deckellos verschließbarer Stutzenabschluss für einen Einfüllstutzen eines Tanks eines Kraftfahrzeugs nach einem der Ansprüche 6 bis 9, **dadurch gekennzeichnet, dass** innerhalb des Rohrstücks (1), oberhalb der oberen Einfüllöffnung (5) ein Haltering eingesetzt ist, in dem das Schiebeelement verschiebbar geführt ist.

11. Deckellos verschließbarer Stutzenabschluss für einen Einfüllstutzen eines Tanks eines Kraftfahrzeugs nach einem der Ansprüche 6 bis 10, **dadurch gekennzeichnet, dass** er eine Abdeckkappe (11) aufweist, die ein Langloch zum Einstecken des Ausgaberohrs (4) aufweist, wobei die Breite des Langlochs etwas größer als der Durchmesser des Ausgaberohrs (4) ist und die Länge des Langlochs im Wesentlichen dem Verschiebeweg des Schiebeelementes entspricht

12. Deckellos verschließbarer Stutzenabschluss für einen Einfüllstutzen eines Tanks eines Kraftfahrzeugs nach einem der vorhergehenden Ansprüche, **dadurch gekennzeichnet, dass** oberhalb der oberen Einfüllöffnung (5) eine zusätzliche Verschlussklappe (12) vorgesehen ist, die durch das Ausgaberohr (4) gegen eine Federkraft aufdrückbar ist.

13. Deckellos verschließbarer Stutzenabschluss für einen Einfüllstutzen eines Tanks eines Kraftfahrzeugs nach Anspruch 12, **dadurch gekennzeichnet, dass** die zusätzliche Verschlussklappe (12) am Verschiebeelement gelenkig gelagert ist und in Schließstellung des Verschlussmechanismus mit einem, dem Gelenk angewandten Teilbereich in eine Verriegelungsnut (13) in dem Rohrabschnitt (1) oder einem relativ zum Rohrabschnitt (1) feststehenden Bauteil eingreift.

14. Deckellos verschließbarer Stutzenabschluss für einen Einfüllstutzen eines Tanks eines Kraftfahrzeugs nach einem der vorhergehenden Ansprüche, wobei das Kraftfahrzeug eine Zentralverriegelung aufweist, **dadurch gekennzeichnet, dass** die Verriegelungsmittel über die Zentralverriegelung des Kraftfahrzeuges zusätzlich derart blockierbar ist, dass eine Entriegelung nur bei in Öffnungsstellung befindlicher Zentralverriegelung möglich ist.

15. Deckellos verschließbarer Stutzenabschluss für einen Einfüllstutzen eines Tanks eines Kraftfahrzeugs nach einem der vorhergehenden Ansprüche, **dadurch gekennzeichnet, dass** der Rohrabschnitt (1) Über- und/oder Unterdruckventile aufweist, über die einen Überdruck oder Unterdruck im Kraftstoffbehälter durch Überbrückung der Dichtfunktion der oberen Einfüllöffnung (5) und/oder der unteren Dichtklappe (2) ausgleichbar ist.

16. Deckellos verschließbarer Stutzenabschluss für einen Einfüllstutzen eines Tanks eines Kraftfahrzeugs nach dem vorhergehenden Anspruch, **dadurch gekennzeichnet, dass** die untere Dichtklappe (2) gegen die Kraft jeweils einer Ventilfeder in beide Richtungen der Achse des Rohrabschnitts (1) verschiebbar gelagert ist, wobei ein Verschieben der untere Dichtklappe (2) die jeweilige Ventilfunktion des Über- oder Unterdruckventils bewirkt.

17. Deckellos verschließbarer Stutzenabschluss für einen Einfüllstutzen eines Tanks eines Kraftfahrzeugs nach Anspruch 16, **dadurch gekennzeichnet, dass** neben der oberen Einfüllöffnung (5) und/oder der unteren Dichtklappe (2) zwei Arten von Bypässen angeordnet sind, wobei ein erster Bypass bei Verschieben eine Ventilkörpers infolge eines Überdrucks in eine erste Richtung öffnet, während ein zweiter Bypass bei Verschieben eines Ventilkörpers in eine zweite Richtung infolge eines Unterdrucks öffnet.

18. Deckellos verschließbarer Stutzenabschluss für einen Einfüllstutzen eines Tanks eines Kraftfahrzeugs nach einem der vorhergehenden Ansprüche, **dadurch gekennzeichnet, dass** er einstückig mit einem Rohrstutzen eines Kraftstoffversorgungssystems eines Kraftfahrzeugs verbunden ist.

19. Deckellos verschließbarer Stutzenabschluss für einen Einfüllstutzen eines Tanks eines Kraftfahrzeugs nach einem der Ansprüche 1 bis 20, **dadurch gekennzeichnet, dass** er auf eine übliche Befestigung für einen Tankdeckel an einem Tankstutzen, insbesondere auf ein Gewinde oder ein Bajonett, aufschraubbar ist.

20. Deckellos verschließbarer Stutzenabschluss für einen Einfüllstutzen eines Tanks eines Kraftfahrzeugs nach dem vorhergehenden Anspruch, **dadurch gekennzeichnet, dass** er eine Abnahmesicherung aufweist, die nur mittels eines Werkzeuges lösbar ist.

21. Deckellos verschließbarer Stutzenabschluss für einen Einfüllstutzen eines Tanks eines Kraftfahrzeugs nach dem vorhergehenden Anspruch, **dadurch gekennzeichnet, dass** die Abschraubsicherung von Federelementen gebildet ist, die bei Aufsetzen des Stutzenabschluss auf den Tankstutzen eine Fläche federnd hintergreifend die Abnahme blockieren, wobei die Federelemente über ein Greifwerkzeug greifbar und zum Deaktivieren der Abnahmesicherung rückziehbar sind.

22. Deckellos verschließbarer Stutzenabschluss für einen Einfüllstutzen eines Tanks eines Kraftfahrzeugs nach einem der vorhergehenden Ansprüche, **dadurch gekennzeichnet, dass** oberhalb der unteren Dichtklappe (2) eine Wasserabfuhr für eindringendes Wasser oder Kondenswasser vorgesehen ist.

## Claims

1. A cap-free closeable neck end for a filler neck of a tank of a motor vehicle, comprising a pipe section (1), a cap free closing mechanism (3) being arranged above the lower sealing flap (2), wherein the closing mechanism (3) has an upper filling opening (5) and at least one upper cover (6), which at least partially covers the upper filling opening (5) in its closed state, wherein a protection against a filling with unsuitable fuel with at least one locking element (7) is provided and the protection being embodied in such a manner that it can be unlocked only when the tank is filled with suitable fuel as a function of the shape of the outlet pipe (4) of the fuel nozzle, so as to allow the insertion of the outlet pipe (4) through the upper filling opening (5) and the lower sealing flap (2), wherein
• above the upper filling opening (5) and arranged at an angle (α) to the longitudinal axis of the pipe section (1) a sliding surface (10) is provided, along which the outlet pipe (4), upon being inserted into the pipe section (1), is guided so as to slide from a starting position, which is laterally offset to the upper filling opening (5), up to an insertion position, which is congruent with the upper filling opening (5), and wherein
• the upper cover (6) is formed by a laterally slideable and the upper filling opening in its close position with a locking region at least partly covering sliding element, which can be locked and unlocked by the locking element (7), **characterized in that**
a lower sealing flap (2) being arranged in the pipe section (1) and when after unlocking the outlet pipe (4) slides on the sliding surface (10), the outlet pipe (4) is pushed against the locking region and in at least a lateral direction the displacement of the sliding element by the end of the outlet pipe (4) is thus effected.

2. Cap-free closeable neck end for a filler neck of a tank of a motor vehicle according to the preceding claim, **characterized in that** provision is made for two or more locking elements (7), which are arranged at a distance (a) to one another, wherein the distance (a) is so large that both locking elements (7) can be unlocked by the outlet pipe (4) of a fuel nozzle comprising a first diameter, in particular a fuel nozzle for diesel fuel, while none or only one locking element (7) can be unlocked by a fuel nozzle comprising a second diameter, which is smaller relative to the first diameter, in particular a fuel nozzle for lead free gasoline.

3. The cap-free closeable neck end for a filler neck of a tank of a motor vehicle according to the preceding claim, **characterized in that** provision is made for two locking elements (7), which are located opposite one another and which can be displaced for unlocking the upper cover (6) from the free end of an outlet pipe (4) with a suitable diameter.

4. The cap-free closeable neck end for a filler neck of a tank of a motor vehicle according to one of the preceding claims, **characterized in that** the locking element (7) is formed by a locking pin, which engages with a recess in the upper cover (6) in a positive manner and which can be displaced laterally or downward against the force of a safety spring (9) through the free end of the outlet pipe (4), wherein, upon the completion of the displacement, the engagement of the locking pin with the recess of the upper cover (6) is overridden.

5. The cap-free closeable neck end for a filler neck of a tank of a motor vehicle according to claim 1, **characterized in that** the sliding surface (10) is an inclined plane, wherein the angle (α) relative to the axis of the pipe section (1) is between 20° and 80°, preferably between 35° and 55° and, more preferably, 45°.

6. The cap-free closeable neck end for a filler neck of a tank of a motor vehicle according to claim 1, **characterized in that** the sliding element has a U-shaped inner region comprising two substantially straight legs and a curved center region, wherein the locking region is formed by a part of the center region and wherein the sliding surface (10) is arranged next to the center region and is at least partially covered by the straight legs.

7. The cap-free closeable neck end for a filler neck of a tank of a motor vehicle according to claim 6, **characterized in that** the recess for engaging the locking elements (7) is arranged in the straight legs of the sliding element, wherein the locking elements (7) protrude from the recesses towards the inside to such an extent that both locking elements (7) can be pressed down only by an outlet pipe (4) comprising a sufficiently large diameter and that an outlet pipe (4) comprising a diameter, which is too small, can only press down one of the locking elements (7).

8. The cap-free closeable neck end for a filler neck of a tank of a motor vehicle according to claim 6 or 7, **characterized in that** the part of the straight legs, which faces away from the center region of the sliding element, is designed in such a manner that, after such a sliding of the outlet pipe (4) in the direction of the upper filling opening (5), the outlet pipe (4) no longer covers the locking elements (7), the locking elements (7) are held down by the straight legs across the further displacement path, until the outlet pipe (4) can be inserted into the upper filling opening (5).

9. The cap-free closeable neck end for a filler neck of a tank of a motor vehicle according to one of claims 6 to 8, **characterized in that** the inner curve of the center region of the sliding element substantially corresponds to the outer curve of the outlet pipe (4).

10. The cap-free closeable neck end for a filler neck of a tank of a motor vehicle according to one of claims 6 to 9, **characterized in that**, within the pipe section (1), above the upper filling opening (5), a holding ring is inserted, in which the sliding element is guided so as to be slideable.

11. The cap-free closeable neck end for a filler neck of a tank of a motor vehicle according to one of claims 6 to 10, **characterized in that** it has a cap (11), which has a long hole for inserting the outlet pipe (4), wherein the width of the long hole is slightly greater than the diameter of the outlet pipe (4) and the length of the long hole substantially corresponds to the displacement path of the sliding element.

12. The cap-free closeable neck end for a filler neck of a tank of a motor vehicle according to one of the preceding claims, **characterized in that**, above the upper filling opening (5) provision is made for an additional closing flap (12), which can be pushed open by the outlet pipe (4) against a spring force.

13. The cap-free closeable neck end for a filler neck of a tank of a motor vehicle according to claim 12, **characterized in that** the additional closing flap (12) is simply supported by the displacement element and engages with a partial region on the site opposite the joint into a locking groove (13) in the pipe section (1) or with a component, which is stationary relative to the pipe section (1), when the closing mechanism is in the closed position.

14. The cap-free closeable neck end for a filler neck of a tank of a motor vehicle according to one of the preceding claims, wherein the motor vehicle has a central locking system, **characterized in that** the locking elements can additionally be blocked via the central locking system of the motor vehicle in such a manner that an unlocking is only possible if the central locking system is in opening position.

15. The cap-free closeable neck end for a filler neck of a tank of a motor vehicle according to one of the preceding claims, **characterized in that** the pipe section (1) has high and/or low pressure valves, via which a high pressure or low pressure in the fuel container can be equalized by bridging the sealing function of the upper filling opening (5) and/or of the lower sealing flap (2).

16. The cap-free closeable neck end for a filler neck of a tank of a motor vehicle according to the preceding claim, **characterized in that** the lower sealing flap (2) is mounted so as to be displaceable against the force of a respective valve spring in both directions of the axis of the pipe section (1), wherein a displacement of the lower sealing flap (2) causes the respective valve function of the high or low pressure valve.

17. The cap-free closeable neck end for a filler neck of a tank of a motor vehicle according to claim 16, **characterized in that**, in addition to the upper filling opening (5) and/or the lower sealing flap (2), two types of bypasses are arranged, wherein a first bypass (19) opens in a first direction in response to a displacement of a valve body as a result of a high pressure, while a second bypass (18) opens in a second direction in response to a displacement of a valve body as a result of a low pressure.

18. The cap-free closeable neck end for a filler neck of a tank of a motor vehicle according to one of the preceding claims, **characterized in that** it is formed integrally with a pipe connection of a fuel supply system of a motor vehicle in one piece.

19. The cap-free closeable neck end for a filler neck of a tank of a motor vehicle according to one of claims 1 to 20, **characterized in that** it can be screwed onto a common fastening for a tank cap on a tank neck, in particular onto a thread or a bayonet.

20. The cap-free closeable neck end for a filler neck of a tank of a motor vehicle according to the preceding claim, **characterized in that** it has a removal protection, which can only be removed by means of a tool.

21. The cap-free closeable neck end for a filler neck of a tank of a motor vehicle according to the preceding claim, **characterized in that** the unscrewing protection is formed by spring elements, which, engaging a surface in a resilient manner in response to a placement of the neck end on the tank neck, block the removal, wherein the spring elements can be gripped via a gripper and can be retracted for deactivating the removal protection.

22. The cap-free closeable neck end for a filler neck of a tank of a motor vehicle according to one of the preceding claims, **characterized in that** provision is made above the lower sealing flap (2) for a water removal for water or condensate ingress.

## Revendications

1. Embout de tubulure pouvant être fermé sans bouchon pour une tubulure de remplissage de réservoir de véhicule automobile doté d'une pièce tubulaire (1), d'un mécanisme de fermeture (3) sans bouchon disposé au-dessus du clapet d'étanchéité inférieur (2) et présentant une ouverture de remplissage supérieure (5) et au moins un cache supérieur (6) recouvrant au moins en partie l'ouverture de remplissage supérieure (5) à l'état fermé, une sécurité anti-remplissage avec un mauvais carburant étant pourvue d'au moins un moyen de verrouillage (7) réalisé de façon à ne pouvoir être déverrouillé qu'en situation de remplissage avec le bon carburant, en fonction de la forme du tube de distribution (4) du pistolet, pour permettre l'insertion du tube de distribution (4) à travers l'ouverture de remplissage supérieure (5) et le clapet d'étanchéité (2) inférieur,
• une surface de glissement (10) étant disposée au-dessus de l'ouverture de remplissage supérieure (5), selon un angle (α) par rapport à l'axe longitudinal de la pièce tubulaire (1), le tube de distribution (4) étant guidé de façon glissante le long de ladite surface de glissement lors de l'insertion dans la pièce tubulaire (1), d'une position de départ décalée en côté par rapport à l'ouverture de remplissage supérieure (5) jusqu'à une position d'insertion au même niveau que le couvercle par rapport à l'ouverture de remplissage supérieure (5),
• et le cache supérieur (6) étant formé par un élément coulissant recouvrant au moins en partie l'ouverture de remplissage supérieure, mobile en côté, à l'état fermé, avec une zone de blocage, l'élément coulissant pouvant être verrouillé et déverrouillé par l'intermédiaire du moyen de verrouillage (7), **caractérisé en**
**ce qu'**un clapet d'étanchéité inférieur (2) est disposé dans la pièce tubulaire (1) et **en ce que** l'élément de fermeture peut être chassé après le déverrouillage de l'extrémité du tube de distribution (4) au moins dans la direction latérale par glissement du tube de distribution (4) sur la surface de glissement (10) du fait de la pression exercée par le tube de distribution (4) sur la zone de blocage.

2. Embout de tubulure pouvant être fermé sans bouchon pour une tubulure de remplissage de réservoir de véhicule automobile selon la revendication 1, **caractérisé en ce que** deux moyens de verrouillage (7) ou plus sont prévus, écartés d'une distance (a) l'un par rapport à l'autre, la distance (a) étant telle que les deux moyens de verrouillage (7) peuvent être déverrouillés par rapport au tube de distribution (4) d'un pistolet d'un premier diamètre, notamment d'un pistolet de carburant diesel, tandis qu'un pistolet d'un second diamètre plus petit, notamment un pistolet d'essence sans plomb, ne permet pas de déverrouiller l'ensemble des éléments de verrouillage (7) ou bien un seul d'entre eux.

3. Embout de tubulure pouvant être fermé sans bouchon pour une tubulure de remplissage de réservoir de véhicule automobile selon la revendication précédente, **caractérisé en ce que** deux moyens de verrouillage (7) opposés sont prévus, ceux-ci pouvant être chassés pour déverrouiller le cache supérieur (6) de l'extrémité libre d'un tube de distribution (4) de diamètre adapté.

4. Embout de tubulure pouvant être fermé sans bouchon pour une tubulure de remplissage de réservoir de véhicule automobile selon l'une quelconque des revendications précédentes, **caractérisé en ce que** le moyen de verrouillage (7) est formé par complémentarité de forme par une cheville d'arrêt s'insérant dans un évidement réalisé dans le cache supérieur (6), ladite cheville pouvant être déplacée en côté ou vers le bas à travers l'extrémité libre du tube de distribution (4), contre la force d'un ressort de sécurité (9), l'emprise de la cheville d'arrêt sur l'évidement du cache supérieur (6) cessant une fois le déplacement réussi.

5. Embout de tubulure pouvant être fermé sans bouchon pour une tubulure de remplissage de réservoir de véhicule automobile selon la revendication 1, **caractérisé en ce que** la surface de glissement (10) est un plan oblique, l'angle (α) étant compris entre 20° et 80°, de préférence entre 35° et 55° et de façon davantage préférée de 45° par rapport à l'axe du segment tubulaire (1).

6. Embout de tubulure pouvant être fermé sans bouchon pour une tubulure de remplissage de réservoir de véhicule automobile selon la revendication 1, **caractérisé en ce que** l'élément coulissant présente une zone intérieure en U avec deux montants essentiellement rectilignes et une zone centrale incurvée, la zone de blocage étant formée par une partie de la zone centrale et (4), la surface de glissement (10) étant disposée à côté de la zone centrale et recouverte au moins en partie par les montants rectilignes.

7. Embout de tubulure pouvant être fermé sans bouchon pour une tubulure de remplissage de réservoir de véhicule automobile selon la revendication 6, **caractérisé en ce que** l'évidement servant à l'insertion des éléments de verrouillage (7) est disposé dans les montants rectilignes de l'élément coulissant, les éléments de verrouillage (7) saillant vers l'intérieur depuis les évidements de telle façon que les deux éléments de verrouillage (7) ne peuvent être comprimés vers le bas que par un tube de distribution (4) de diamètre suffisant et qu'un tube de distribution (4) ne peut comprimer vers le bas qu'un des éléments de verrouillage (7) lorsque son diamètre est trop petit.

8. Embout de tubulure pouvant être fermé sans bouchon pour une tubulure de remplissage de réservoir de véhicule automobile selon la revendication 6 ou 7, **caractérisé en ce que** la partie des montants rectilignes écartée de la zone centrale de l'élément coulissant est réalisée de telle sorte qu'après un glissement du tube de distribution (4) en direction de l'ouverture de remplissage supérieure (5) dans une mesure telle que le tube de distribution (4) ne recouvre pas davantage le moyen de verrouillage (7), le moyen de verrouillage (7) est maintenu descendu pendant la course de déplacement des montants rectilignes, jusqu'à insertion du tube de distribution (4) dans l'ouverture de remplissage supérieure (5).

9. Embout de tubulure pouvant être fermé sans bouchon pour une tubulure de remplissage de réservoir de véhicule automobile selon l'une quelconque des revendications 6 à 8, **caractérisé en ce que** la courbure intérieure de la zone centrale de l'élément coulissant coïncide pour l'essentiel avec la courbure extérieure du tube de distribution (4).

10. Embout de tubulure pouvant être fermé sans bouchon pour une tubulure de remplissage de réservoir de véhicule automobile selon l'une quelconque des revendications 6 à 9, **caractérisé en ce qu'**une bague de retenue dans laquelle l'élément coulissant est guidé de façon coulissante est placée à l'intérieur de la pièce tubulaire (1), au-dessus de l'ouverture de remplissage supérieure (5).

11. Embout de tubulure pouvant être fermé sans bouchon pour une tubulure de remplissage de réservoir de véhicule automobile selon l'une quelconque des revendications 6 à 10, **caractérisé en ce qu'**il comporte un capuchon couvrant (11) comportant un trou oblong pour l'insertion du tube de distribution (4), la largeur du trou oblong étant quelque peu supérieure au diamètre du tube de distribution (4) et la longueur du trou oblong coïncidant pour l'essentiel avec la course de coulissement de l'élément coulissant.

12. Embout de tubulure pouvant être fermé sans bouchon pour une tubulure de remplissage de réservoir de véhicule automobile selon l'une quelconque des revendications précédentes, **caractérisé en ce qu'**un capuchon de fermeture supplémentaire (12) est prévu au-dessus de l'ouverture de remplissage supérieure (5), ledit capuchon pouvant être ouvert par pression à travers le tube de distribution (4) en allant contre une force de ressort.

13. Embout de tubulure pouvant être fermé sans bouchon pour une tubulure de remplissage de réservoir de véhicule automobile selon la revendication 12, **caractérisé en ce que** le capuchon de fermeture supplémentaire (12) est disposé de façon articulée au niveau de l'élément coulissant et s'insère dans une encoche de verrouillage (13)dans le segment tubulaire (1) ou dans un élément fixe par rapport au segment tubulaire (1) en position fermée du mécanisme de fermeture, avec une zone partielle orientée vers l'articulation.

14. Embout de tubulure pouvant être fermé sans bouchon pour une tubulure de remplissage de réservoir de véhicule automobile selon l'une quelconque des revendications précédentes, le véhicule automobile comportant un verrouillage centralisé, **caractérisé en ce que** le moyen de verrouillage peut être bloqué en sus par le verrouillage centralisé du véhicule automobile de telle sorte qu'un déverrouillage n'est possible que lorsque le verrouillage centralisé est en position ouverte.

15. Embout de tubulure pouvant être fermé sans bouchon pour une tubulure de remplissage de réservoir de véhicule automobile selon l'une quelconque des revendications précédentes, **caractérisé en ce que** le segment tubulaire (1) comporte des soupapes de sur et de sous-pression par l'intermédiaire desquelles une surpression ou une sous-pression s'exerçant dans le réservoir de carburant peut être compensée en court-circuitant la fonction d'étanchéité de l'ouverture de remplissage supérieure (5) et/ou du clapet d'étanchéité inférieur (2).

16. Embout de tubulure pouvant être fermé sans bouchon pour une tubulure de remplissage de réservoir de véhicule automobile selon la revendication précédente, **caractérisé en ce que** le clapet d'étanchéité inférieur (2) peut être disposé de façon à pouvoir être déplacé dans les deux directions de l'axe du segment tubulaire (1), en allant contre la force d'un ressort de soupape respectif, un déplacement du clapet d'étanchéité inférieur (2) activant la fonction de soupape respective de la soupape de sur ou de sous-pression.

17. Embout de tubulure pouvant être fermé sans bouchon pour une tubulure de remplissage de réservoir de véhicule automobile selon la revendication 16, **caractérisé en ce que** des dérivations de deux types sont disposées à côté de l'ouverture de remplissage supérieure (5) et/ou du clapet d'étanchéité inférieur (2), une première dérivation s'ouvrant dans une première direction lorsque le corps de soupape se déplace du fait d'une surpression tandis qu'une seconde dérivation s'ouvre dans une seconde direction lorsque le corps de soupape se déplace du fait d'une sous-pression.

18. Embout de tubulure pouvant être fermé sans bouchon pour une tubulure de remplissage de réservoir de véhicule automobile selon l'une quelconque des revendications précédentes, **caractérisé en ce qu'**il est relié d'un seul tenant à une tubulure de tube de système d'alimentation en carburant d'un véhicule automobile.

19. Embout de tubulure pouvant être fermé sans bouchon pour une tubulure de remplissage de réservoir de véhicule automobile selon l'une quelconque des revendications 1 à 20, **caractérisé en ce qu'**il peut être vissé sur une fixation courante de couvercle de réservoir au niveau d'une tubulure de réservoir, notamment sur un filetage ou une baïonnette.

20. Embout de tubulure pouvant être fermé sans bouchon pour une tubulure de remplissage de réservoir de véhicule automobile selon la revendication précédente, **caractérisé en ce qu'**il comporte une sécurité anti-perte et ne peut être détaché qu'à l'aide d'un outil.

21. Embout de tubulure pouvant être fermé sans bouchon pour une tubulure de remplissage de réservoir de véhicule automobile selon la revendication précédente, **caractérisé en ce que** la sécurité anti-dévissage est formée d'éléments à ressort empêchant la chute en retenant par ressort l'embout sur la tubulure de réservoir, les éléments à ressort pouvant être retirés à l'aide d'un outil de préhension pour désactiver la sécurité anti-chute.

22. Embout de tubulure pouvant être fermé sans bouchon pour une tubulure de remplissage de réservoir de véhicule automobile selon l'une quelconque des revendications précédentes, **caractérisé en ce qu'**une évacuation d'eau est prévue au-dessus du clapet d'étanchéité inférieur (2) pour l'eau ayant pénétré le système ou la condensation s'étant formée dans celui-ci.
